(19) Europäisches Patentamt
European Patent Office
Office européen des brevets

(11) **EP 1 582 718 B1**

(12) **FASCICULE DE BREVET EUROPEEN**

(45) Date de publication et mention
de la délivrance du brevet:
**02.06.2010 Bulletin 2010/22**

(51) Int Cl.:
*F02D 41/00* *(2006.01)*        *F02D 21/08* *(2006.01)*

(21) Numéro de dépôt: **05300224.2**

(22) Date de dépôt: **25.03.2005**

(54) **Procédé et système de commande du fonctionnement d'un moteur à combustion interne de véhicule automobile**

Verfahren und Vorrichtung zur Steuerung einer Brennkraftmaschine in einem Kraftfahrzeug

Method and system of operating an internal combustion engine in a vehicle

(84) Etats contractants désignés:
**AT BE BG CH CY CZ DE DK EE ES FI FR GB GR HU IE IS IT LI LT LU MC NL PL PT RO SE SI SK TR**

(30) Priorité: **29.03.2004 FR 0403234**

(43) Date de publication de la demande:
**05.10.2005 Bulletin 2005/40**

(73) Titulaire: **RENAULT S.A.S.**
**92100 Boulogne Billancourt (FR)**

(72) Inventeurs:
• **Buis, Emmanuel M.**
**92500 Rueil Malmaison (FR)**
• **Fontvieille, Laurent**
**91190 Gif sur Yvette (FR)**

(56) Documents cités:
**EP-A- 1 024 261     EP-A- 1 024 264**
**FR-A- 2 829 185     FR-A- 2 829 530**

**Description**

La présente invention concerne un procédé et un système de commande du fonctionnement d'un moteur à combustion interne de véhicule automobile.

La commande du fonctionnement d'un moteur à combustion interne consiste à gérer le moteur à partir d'un ensemble de capteurs et d'actionneurs. L'ensemble des lois de commande sous forme de stratégie logicielle et des paramètres de caractérisation sous forme d'étalonnage d'un moteur sont généralement mémorisées dans un calculateur se présentant sous la forme d'une unité de commande électronique.

Un tel système comprend généralement un ensemble turbocompresseur de suralimentation comprenant un compresseur et une turbine à géométrie variable. Le compresseur alimente le moteur en air à une pression supérieure à la pression atmosphérique et la turbine est traversée par les gaz d'échappement issus du moteur.

Un ensemble turbocompresseur comprend une turbine et un compresseur ayant pour but d'augmenter la quantité d'air admise dans les cylindres du moteur. La puissance fournie par les gaz d'échappement à la turbine peut être modulée en installant une soupape de décharge ou en prévoyant une turbine munie d'ailettes à orientation variable de façon à constituer un turbocompresseur à géométrie variable (TGV).

Le compresseur est monté sur un axe mécanique recevant également la turbine de sorte que le compresseur comprime l'air qui entre dans le répartiteur d'admission.

Un échangeur de chaleur peut être placé entre le compresseur et le répartiteur d'admission du moteur afin de refroidir l'air comprimé à la sortie des compresseurs.

Des actionneurs sont utilisés pour piloter l'ouverture et la fermeture des soupapes de décharge ou l'orientation des ailettes de la turbine de façon à modifier la géométrie de ladite turbine. Les signaux de commande de ces actionneurs sont fournis par l'unité de commande électronique.

Dans le cas d'un moteur à combustion, en particulier un moteur Diesel, des oxydes d'azote et des particules sont rejetés dans les gaz d'échappement. Le moteur produits en outre des hydrocarbures imbrûlés et du monoxyde de carbone. Les normes de dépollution étant de plus en plus strictes, un catalyseur peut être placé dans la ligne d'échappement en amont du filtre à particules pour oxyder les réducteurs présents à la sortie du moteur, tels les hydrocarbures imbrûlés et le monoxyde de carbone. Un tel catalyseur n'est efficace qu'au-dessus d'une certaine température, où l'élimination des réducteurs est active, et le catalyseur est amorcé.

Ce sont les gaz d'échappement qui chauffent le catalyseur, et, par conséquent, plus la température des gaz d'échappement est élevée, plus rapidement le catalyseur est amorcé.

Un circuit de dérivation permettant le recyclage d'une partie des gaz d'échappement, dit "circuit EGR" comporte une vanne qui permet de moduler la quantité de gaz d'échappement recyclés dans le répartiteur d'admission.

Afin de réduire la quantité de particules rejetées dans les gaz d'échappement, on peut prévoir le montage d'un filtre à particules dans la canalisation d'échappement. Un tel filtre comprend un ensemble de microcanaux dans lesquels une grande partie des particules se trouve piégée. Lorsque le filtre est saturé en particules, il convient de le vider en brûlant les particules au cours d'une phase de régénération qui peut être mise en oeuvre au moyen d'un dispositif de chauffe ou par un réglage spécifique du moteur.

Comme cela est connu, un asservissement du débit d'alimentation en air frais du moteur sur une consigne de débit d'alimentation en air frais du moteur permet de réduire la production d'oxydes d'azote et de maintenir un taux de particules acceptable. Un exemple d'un tel asservissement est d'ailleurs décrit dans la demande de brevet française FR 2 829 530 (Renault).

Des stratégies existent aussi dans le but d'optimiser la réponse du turbo, voir EP 1024261.

Des stratégies existent dans le but de minimiser la production d'oxydes d'azote et de particules, mais pas pour réduire les émissions d'hydrocarbures et de monoxyde de carbone en sortie du moteur.

Aussi, au vu de ce qui précède, l'invention a pour but de réguler la pression d'admission afin d'augmenter la richesse en carburant à l'échappement, et donc le niveau thermique en sortie du moteur, afin d'augmenter l'énergie calorifique à l'échappement lorsque le catalyseur est froid, et réduire les quantités d'hydrocarbures et de monoxyde de carbone rejetés.

Ainsi, selon un aspect de l'invention, il est proposé un procédé de commande du fonctionnement d'un moteur à combustion interne de véhicule automobile équipé d'un ensemble turbocompresseur de suralimentation, une partie des gaz de sortie du moteur étant recyclés à l'admission du moteur. On mesure le débit d'alimentation en air frais du moteur, la pression et la température d'admission des gaz. On asservit le débit d'alimentation en air frais du moteur sur une consigne de débit d'alimentation en air frais du moteur, en modulant un taux de recyclage de gaz de sortie du moteur, et on asservit la pression d'admission des gaz sur une consigne de pression d'admission des gaz, en modulant un taux d'air frais d'alimentation du moteur par commande du positionnement du volet d'admission d'une vanne commandée de régulation du débit d'alimentation en air du moteur. Le positionnement est calculé à partir d'un pré-positionnement du volet d'admission de ladite vanne commandée.

On augmente alors l'énergie calorifique à l'échappement, lorsque le catalyseur est froid, ce qui réduit le délai d'amorçage du catalyseur, et réduit le coût en métaux précieux tel que le platine, et on réduit les quantités d'hydrocarbures et de monoxyde de carbone rejetés dans l'atmosphère.

Le pré-positionnement permet d'anticiper les variations de la pression de consigne d'admission des gaz, et d'obtenir un meilleur asservissement en régime transitoire.

Dans un mode de réalisation préféré, la modulation du taux de recyclage de gaz de sortie du moteur s'effectue par commande d'une vanne commandée de régulation du débit de recyclage des gaz de sortie du moteur.

Le pré-positionnement du volet d'admission de la vanne commandée est une fonction de paramètres comprenant une section efficace objective du volet d'admission de la vanne commandée.

Dans un mode de mise en oeuvre préféré, la section efficace objective du volet d'admission de la vanne commandée est une fonction de paramètres comprenant la consigne de débit d'alimentation en air frais du moteur, la pression d'admission des gaz, la température d'admission des gaz, et une pression de l'air en amont du volet d'admission de la vanne commandée de régulation du débit d'alimentation en air du moteur.

Dans un mode de mise en oeuvre avantageux, la pression des gaz en amont du volet d'admission de la vanne commandée de régulation du débit d'alimentation en air du moteur est une fonction de paramètres comprenant une masse d'air en amont du volet d'admission de la vanne commandée de régulation du débit d'alimentation en air du moteur, de la température d'admission des gaz, d'une constante massique de l'air, et du volume de la portion du circuit d'air amont du volet d'admission de la vanne commandée de régulation du débit d'alimentation en air du moteur.

Dans un mode de mise en oeuvre préféré, la consigne de pression d'admission des gaz est une fonction de paramètres comprenant le débit d'alimentation en carburant du moteur, la vitesse de rotation du moteur, et la température du fluide de refroidissement du moteur.

Dans un mode de mise en oeuvre avantageux, la commande du positionnement du volet d'admission de la vanne commandée de régulation du débit d'alimentation en air du moteur dépend de la différence entre la consigne de pression d'admission des gaz et la pression d'admission des gaz, de la dérivée de ladite différence entre la consigne de pression d'admission des gaz et la pression d'admission des gaz, de l'intégrale sur un intervalle de temps de ladite différence entre la consigne de pression d'admission des gaz et la pression d'admission des gaz, et dudit pré-positionnement.

Dans un mode de mise en oeuvre préféré, la consigne de débit d'alimentation en air frais du moteur est une fonction de paramètres comprenant le débit d'alimentation en carburant du moteur, et la vitesse de rotation du moteur.

Selon un autre aspect de l'invention, il est également proposé un système de commande du fonctionnement d'un moteur à combustion interne de véhicule automobile équipé d'un ensemble turbocompresseur de suralimentation, une partie des gaz de sortie du moteur étant recyclés à l'admission du moteur. Le système comprend une unité de commande électronique capable d'effectuer des calculs à partir de données mémorisées et de valeurs mesurées, un capteur pour mesurer le débit d'alimentation en air frais du moteur, un capteur pour mesurer la pression d'admission des gaz du moteur, un capteur pour mesurer la température d'admission des gaz du moteur, et une vanne commandée à volet d'admission, de régulation du débit d'alimentation en air du moteur. L'unité de commande électronique comprenant des moyens d'asservissement du débit d'alimentation en air frais du moteur sur une consigne de débit d'alimentation en air frais du moteur, et des moyens d'asservissement de la pression d'admission des gaz sur une consigne de pression d'admission des gaz, aptes à moduler un taux d'air frais d'alimentation du moteur par commande du positionnement du volet d'admission d'une vanne commandée de régulation du débit d'alimentation en air du moteur, ledit positionnement étant calculé à partir d'un pré-positionnement du volet d'admission de ladite vanne commandée.

Dans un mode de mise en oeuvre préféré, les moyens d'asservissement de la pression d'admission des gaz comprennent des moyens de calcul d'une consigne prédéterminée de pression d'admission des gaz, et des moyens de commande du positionnement du volet d'admission de la vanne commandée de régulation du débit d'alimentation en air du moteur. Les moyens de commande comprennent des moyens de calcul d'un pré-positionnement du volet d'admission de ladite vanne commandée.

D'autres buts, caractéristiques et avantages de l'invention apparaîtront à la lecture de la description suivante, donnée uniquement à titre d'exemple nullement limitatif, et faite en référence aux dessins annexés sur lesquels :

- la figure 1 est une vue schématique d'un mode de réalisation d'un système selon un aspect de l'invention ;
- la figure 2 illustre un asservissement de la pression d'admission des gaz sur une consigne calculée de pression d'admission des gaz, selon un aspect de l'invention ;
- la figure 3 illustre une étape de calcul du pré-positionnement de l'asservissement représenté sur la figure 2 ; et
- la figure 4 illustre une étape d'estimation de pression amont représenté sur la figure 3.

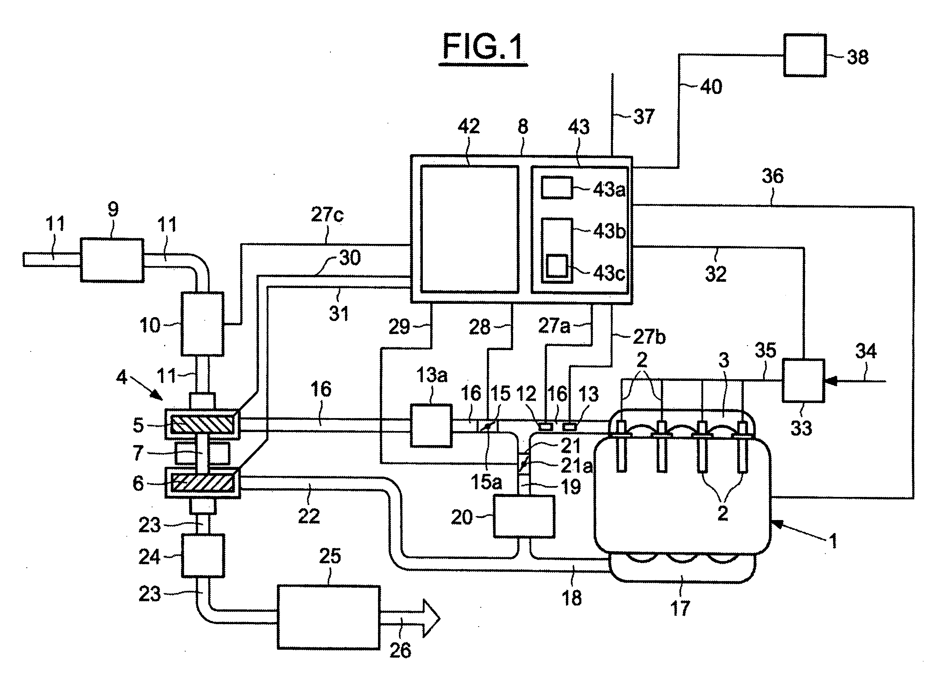

Sur la figure 1, se trouve représenté un moteur à combustion interne 1 à quatre cylindres, chaque cylindre étant associé à un dispositif d'injection de carburant, référencé 2. L'air frais pénétrant dans le répartiteur d'admission 3 du moteur 1 traverse au préalable un turbocompresseur 4 comprenant un compresseur 5 et une turbine 6 montés sur un arbre commun 7. Les débits fournis par le compresseur 5 et la turbine 6 sont commandés par une unité de commande électronique 8.

L'air frais, prélevé à l'extérieur, traverse tout d'abord un filtre à air 9, puis un débitmètre 10, avant de pénétrer dans le compresseur 5 par un conduit 11. Le moteur 1 comprend un capteur 12 pour mesurer la température $T_{adm}$ d'admission des gaz en entrée du répartiteur d'admission 3, et un capteur 13 pour mesurer la pression $P_{adm}$ d'admission des gaz en entrée du répartiteur d'admission 3. L'air comprimé issu du compresseur 5 traverse un échangeur de chaleur 14 qui permet de refroidir les gaz admis. En sortie de l'échangeur 14, l'air comprimé refroidi traverse une vanne commandée 15 de régulation du débit d'alimentation en air du moteur 1. La vanne commandée 15 comprend un volet d'admission 15a, permettant de faire varier le débit. L'air comprimé circule du compresseur 5 au répartiteur d'admission 3 par un conduit 16 qui traverse l'échangeur de chaleur 14 et comprend la vanne commandée 15.

Les gaz issus du collecteur d'échappement 17, après combustion dans le moteur 1, par un conduit 18 sont dirigés en partie vers le conduit 16 par un conduit 19, afin d'être en partie recyclés après mélange dans l'air d'admission du conduit 16 dirigé vers le répartiteur d'admission 3. Cette partie des gaz de sortie du moteur 1 est refroidie par traversée d'un échangeur de chaleur 20, puis traverse une vanne commandée 21 de régulation du débit de recyclage des gaz de sortie du moteur 1. La vanne commandée 21 comprend un volet d'admission 21a, permettant de faire varier le débit.

L'autre partie des gaz de sortie du moteur 1, traverse un conduit 22, jusqu'à la turbine 6 afin d'entraîner le compresseur 5. A la sortie de la turbine 6, les gaz circulent dans un conduit 23, traversent un dispositif catalytique 24 permettant de réduire les taux en hydrocarbures et en monoxyde de carbone des gaz de sortie du moteur 1. Les gaz traversent ensuite un filtre à particules 25 avant d'être rejetés dans l'atmosphère par le pot d'échappement 26.

L'unité de commande électronique 8 comprend, de façon classique, un microprocesseur ou unité centrale, des mémoires vives, des mémoires mortes, des convertisseurs analogiques/numériques et différentes interfaces d'entrée et de sortie.

L'unité de commande électronique 8 reçoit différents signaux permettant le fonctionnement du système. L'unité de commande électronique 8 reçoit en particulier par la connexion 27a un signal du capteur de température 12 indiquant la valeur de la température $T_{adm}$ d'admission des gaz, et par la connexion 27b un signal du capteur de pression 13 indiquant la valeur de la pression $P_{adm}$ d'admission des gaz. Le débit $Q_{air\_frais}$ d'alimentation en air frais du moteur 1, mesuré par le débitmètre 10, est amené sous la forme d'un signal par la connexion 27c à l'unité de commande électronique 8.

L'unité de commande électronique 8 émet différents signaux permettant la gestion du fonctionnement du moteur 1 ainsi que d'autres organes du véhicule, non représentés sur la figure 1. L'unité de commande électronique 8 émet en particulier par la connexion 28, un signal de commande de pilotage de la vanne 15, et émet par la connexion 29, un signal de commande de pilotage de la vanne 21. L'unité de commande électronique 8 régule la pression de suralimentation en agissant sur l'orientation d'ailettes internes du compresseur 5 et/ou de la turbine 6 au moyen des connexions 30 et 31. L'unité de commande électronique 8 émet également, par une connexion 32, un signal de commande pour un régulateur 33 du débit $Q_{carb}$ de carburant injecté dans le moteur 1 par les différents dispositifs d'injection 2. Le régulateur 33 est capable de mesurer le débit $Q_{carb}$ de carburant injecté dans le moteur 1. A cet effet, le carburant provenant du réservoir du véhicule est amené à l'organe de régulation 33 par la conduite 34 et le carburant est ensuite distribué par la conduite 35 aux différents injecteurs 2. L'unité de commande électronique 8 reçoit en outre, par une connexion 36, un signal indiquant la valeur de la vitesse de rotation $N_{moteur}$ du moteur 1. L'unité de commande électronique 8 comprend également une connexion 37 fournissant une information de vitesse du véhicule.

Le système comprend également un capteurs 38, pour mesurer la température $T_{lr}$ du fluide de refroidissement du moteur 1, relié à l'unité de commande électronique 8 par une connexion 40.

L'unité de commande électronique 8 comprend en outre des moyens 42 d'asservissement du débit $Q_{air\_frais}$ d'alimentation en air frais du moteur 1, et des moyens 43 d'asservissement de la pression $P_{adm}$ d'admission des gaz.

Les moyens 43 d'asservissement de la pression $P_{adm}$ d'admission des gaz comprennent des moyens de calcul 43a d'une consigne prédéterminée $P_{adm}^{consigne}$ de pression d'admission des gaz, et des moyens de commande 43b du positionnement du volet d'admission 15a de la vanne commandée 15. Les moyens de commande 43b comprennent des moyens de calcul 43c d'un pré-positionnement du volet d'admission 15a de la vanne commandée 15b.

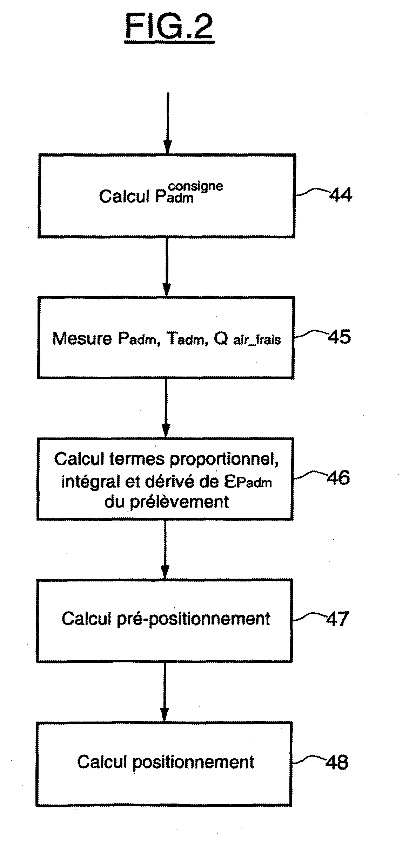

La figure 2 représente un asservissement de la pression $P_{adm}$ d'admission des gaz sur une consigne $P_{adm}^{consigne}$ de pression d'admission des gaz, selon un aspect de l'invention.

A l'étape 44, on effectue un calcul de la consigne $P_{adm}^{consigne}$ de pression d'admission des gaz en utilisant une fonction de paramètres qui comprennent la vitesse de rotation $N_{moteur}$ du moteur 1 en tours/minute, le débit $Q_{carb}$ d'alimentation en carburant du moteur 1 en kg/s, et la température $T_{lr}$ du fluide de refroidissement du moteur 1 en K.

A l'étape 45, on mesure la pression $P_{adm}$ d'admission des gaz, la température $T_{adm}$ d'admission des gaz, et le débit $Q_{air\_frais}$ d'alimentation en air frais du moteur 1.

A l'étape 46, on calcule les termes proportionnel, intégral et dérivé de la différence $\varepsilon_{Padm}$ entre la consigne $P_{adm}^{consigne}$ de pression d'admission des gaz et la pression $P_{adm}$ d'admission des gaz servant. En d'autres termes, on calcule la différence $\varepsilon_{Padm}$ entre la consigne calculée $P_{adm}^{consigne}$ de la pression d'admission des gaz et la pression mesurée $P_{adm}$ d'admission des gaz, la dérivée de ladite différence $\varepsilon_{Padm}$ entre la consigne calculée $P_{adm}^{consigne}$ de la pression d'admission des gaz et la pression mesurée $P_{adm}$ d'admission des gaz, et l'intégrale sur un intervalle de temps de ladite différence $\varepsilon_{Padm}$ entre la consigne calculée $P_{adm}^{consigne}$ de la pression d'admission des gaz et la pression mesurée $P_{adm}$ d'admission des gaz.

On calcule, à l'étape 47 le pré-positionnement du volet d'admission 15a de la vanne commandée 15 de régulation du débit d'alimentation en air du moteur 1 , et à l'étape 48, on calcule le positionnement du volet d'admission 15a de la vanne commandée 15 de régulation du débit d'alimentation en air du moteur 1 à partir du pré-positionnement calculé à l'étape 47 et des termes proportionnel, intégral et dérivé de la différence $\varepsilon_{Padm}$ entre la consigne $P_{adm}^{consigne}$ de pression d'admission des gaz et la pression $P_{adm}$ d'admission des gaz servant calculés à l'étape 46.

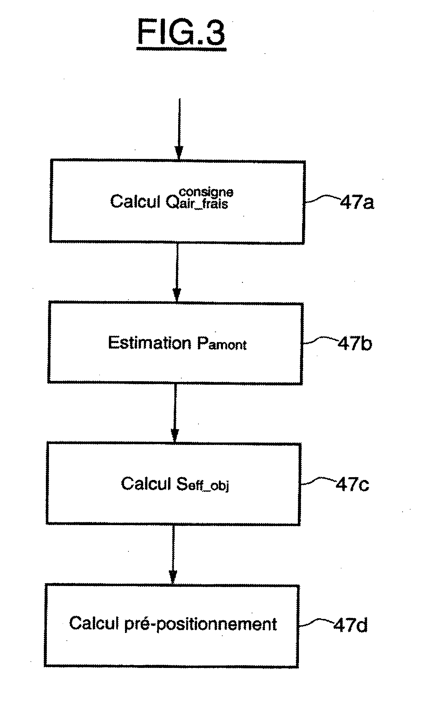

La figure 3 représente des étapes composant l'étape 47 de calcul de pré-positionnement du volet d'admission 15a de la vanne commandée 15 de régulation du débit d'alimentation en air du moteur 1.

A l'étape 47a, on calcule la consigne $Q_{air\_frais}^{consigne}$ de débit d'alimentation en air frais du moteur 1 en fonction de paramètres comprenant le débit $Q_{carb}$ d'alimentation en carburant du moteur 1 en kg/s, et la vitesse de rotation $N_{moteur}$ du moteur 1, en tours/min.

A l'étape 47b, on estime la pression $P_{amont}$ en amont du volet d'admission 15a de la vanne commandée 15 de régulation du débit d'alimentation en air du moteur 1.

On calcule, à l'étape 47c, la section efficace objective $S_{elf\_obj}$ du volet d'admission 15a. On entend par section efficace objective, une consigne de section efficace. La section efficace objective permet d'introduire dans le calcul du pré-positionnement les caractéristiques dimensionnelles du volet d'admission 15a de ladite vanne commandée 15.

A l'étape 47d, on calcule le pré-positionnement en fonction de paramètres comprenant la section efficace objective $S_{eff\_obj}$ du volet d'admission 15a calculée à l'étape 47c. Ce calcul est par exemple effectué au moyen de la relation suivante :

$$S_{eff\_obj} = \frac{Q_{air\_frais}^{consigne}}{\dfrac{P_{amont}}{\sqrt{T_{adm}}}.BSV\left(\dfrac{P_{adm}^{consigne}}{P_{amont}}\right)}$$

dans laquelle BSV est une fonction prédéterminée, par exemple au moyen d'une table mémorisée, simplification de la formule de Barré Saint Venant. On a supposé dans cette formule que le débit d'air vaut la consigne $Q_{air\_frais}^{consigne}$ de débit d'alimentation en air frais du moteur 1 , que la pression en aval du volet d'admission 15a vaut la consigne $P_{adm}^{consigne}$ de pression d'admission des gaz, que la température en amont du volet d'admission 15a vaut la température $T_{adm}$ d'admission des gaz, et que la section efficace vaut la section efficace objective $S_{eff\_obj}$ du volet d'admission 15a.

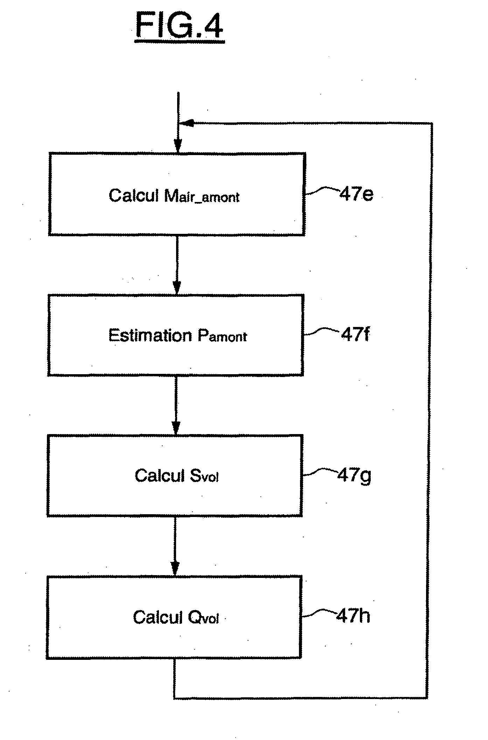

La figure 4 représente un boucle de calcul de l'étape 47b d'estimation de la pression $P_{amont}$ en amont du volet d'admission 15a, représentée sur la figure 3.

A l'étape 47e, on calcule la masse d'air $M_{air\_amont}$ en amont du volet d'admission 15 au moyen de la relation :

$$M_{air\_amont} = \sum\left(Q_{air\_frais} - Q_{vol}\right)$$

dans laquelle :

$Q_{vol}$ est le débit d'air passant le volet d'admission 15a, en kg/s, et calculé à l'étape 47h par la relation $Q_{vol} = S_{vol}.\dfrac{P_{adm}}{\sqrt{T_{adm}}}.BSV\left(\dfrac{P_{adm}}{P_{amont}}\right),$

dans laquelle :
$S_{vol}$ est la section efficace du volet d'admission 15a, en $m^2$, fonction prédéterminée d'une position Pos mesurée du volet d'admission 15a, par exemple en radians par rapport à un position de référence horizontale, et calculée à l'étape 47g.

De plus à l'étape 47f, on estime la pression $P_{amont}$ enamont du volet d'amission 15a au moyen de la relation suivante :

$$P_{amont} = \frac{M_{air\_amont} \cdot T_{adm} \cdot R_{air}}{V_{amont}}$$

dans laquelle :

R$_{air}$ est une constante massique de l'air égale à 287 ; et

V$_{amont}$ est le volume du circuit amont du volet d'admission, prédéterminé, en m$^3$.

L'invention permet donc de réduire les quantités d'hydrocarbures rejetés dans l'atmosphère par les gaz d'échappement du moteur.

L'invention permet, en outre, d'augmenter la richesse en carburant à l'échappement, donc l'énergie calorifique à l'échappement, et de réduire ainsi le temps d'amorçage du catalyseur, et le coût en métaux précieux.

**Revendications**

1. Procédé de commande du fonctionnement d'un moteur à combustion interne de véhicule automobile équipé d'un ensemble turbocompresseur (4) de suralimentation, une partie des gaz de sortie du moteur étant recyclés à l'admission du moteur, dans lequel:

   - on mesure le débit (Q$_{air\_frais}$) d'alimentation en air frais du moteur (1);
   - on mesure la pression (P$_{adm}$) et la température (T$_{adm}$) d'admission des gaz ;
   - on asservit le débit (Q$_{air\_frais}$) d'alimentation en air frais du moteur (1) sur une consigne $\left( Q_{air\_frais}^{consigne} \right)$ de débit d'alimentation en air frais du moteur (1), en modulant un taux de recyclage de gaz de sortie du moteur (1) ; et
   - on asservit la pression (P$_{adm}$) d'admission des gaz sur une consigne $\left( P_{adm}^{consigne} \right)$ de pression d'admission des gaz, en modulant un taux d'air frais d'alimentation du moteur (1) par commande du positionnement du volet d'admission (15a) d'une vanne commandée (15) de régulation du débit d'alimentation en air du moteur (1), ledit positionnement étant calculé en outre à partir d'un pré-positionnement du volet d'admission (15a) de ladite vanne commandée (15),

   qui est une fonction de paramètres comprenant la consigne $\left( Q_{air\_frais}^{consigne} \right)$ de débit d'alimentation en air frais du moteur (1), la pression (P$_{adm}$) d'admission des gaz, la température (T$_{adm}$) d'admission des gaz, et une pression (P$_{amont}$) de l'air en amont du volet d'admission (15a) de la vanne commandée (15) de régulation du débit d'alimentation en air du moteur (1).

2. Procédé selon la revendication 1, **caractérisé par le fait que** la modulation du taux de recyclage de gaz de sortie du moteur (1) s'effectue par commande d'une vanne commandée (21) de régulation du débit de recyclage des gaz de sortie du moteur (1).

3. Procédé selon l'une des revendications 1 et 2, **caractérisé par le fait que** ladite pression (P$_{amont}$) des gaz en amont du volet d'admission (15a) de la vanne commandée (15) de régulation du débit d'alimentation en air du moteur (1) est une fonction de paramètres comprenant une masse d'air (M$_{air\_amont}$) en amont du volet d'admission (15a) de la vanne commandée (15) de régulation du débit d'alimentation en air du moteur (1), de la température (T$_{adm}$) d'admission des gaz, d'une constante massique (R$_{air}$) de l'air, et du volume de la portion du circuit d'air amont du volet d'admission (15a) de la vanne commandée (15) de régulation du débit d'alimentation en air du moteur (1).

4. Procédé selon l'une quelconque des revendications 1 à 3, **caractérisé par le fait que** la consigne $\left( P_{adm}^{consigne} \right)$ de pression d'admission des gaz est une fonction de paramètres comprenant le débit (Q$_{carb}$) d'alimentation en carburant du moteur (1), la vitesse de rotation (N$_{moteur}$) du moteur (1), et la température (T$_{lr}$) du fluide de refroidissement du moteur (1).

5. Procédé selon l'une quelconque des revendications 1 à 4, **caractérisé par le fait que** la commande du positionnement du volet d'admission (15a) de la vanne commandée (15) de régulation du débit d'alimentation en air du moteur (1) dépend de la différence ($\varepsilon_{Padm}$) entre la consigne $\left( P_{adm}^{consigne} \right)$ de pression d'admission des gaz et la pression (P$_{adm}$) d'admission des gaz, de la dérivée de ladite différence ($\varepsilon_{Padm}$) entre la consigne $\left( P_{adm}^{consigne} \right)$ de pression d'admission des gaz et la pression (P$_{adm}$) d'admission des gaz, de l'intégrale sur un intervalle de temps de ladite différence ($\varepsilon_{Padm}$) entre la consigne $\left( P_{adm}^{consigne} \right)$ de pression d'admission des gaz et la pression (P$_{adm}$) d'admission des gaz, et dudit pré-positionnement.

6. Procédé selon l'une quelconque des revendications 1 à 5, **caractérisé par le fait que** la consigne $\left( Q_{air\_frais}^{consigne} \right)$ de débit d'alimentation en air frais du moteur (1) est une fonction de paramètres comprenant le débit ($Q_{carb}$) d'alimentation en carburant du moteur (1), et la vitesse de rotation ($N_{moteur}$) du moteur (1).

**7.** Système de commande du fonctionnement d'un moteur (1) à combustion interne de véhicule automobile équipé d'un ensemble turbocompresseur (4) de suralimentation, une partie des gaz de sortie du moteur étant recyclés à l'admission du moteur, ou le système comprend une unité de commande électronique (8) capable d'effectuer des calculs à partir de données mémorisées et de valeurs mesurées, un capteur (10) pour mesurer le débit ($Q_{air\_frais}$) d'alimentation en air frais du moteur (1), un capteur (13) pour mesurer la pression ($P_{adm}$) d'admission des gaz du moteur (1), un capteur (12) pour mesurer la température ($T_{adm}$) d'admission des gaz du moteur (1), et une vanne commandée (15) à volet d'admission (15a), de régulation du débit d'alimentation en air du moteur (1), l'unité de commande électronique (8) comprenant des moyens d'asservissement (42) du débit ($Q_{air\_frais}$) d'alimentation en air frais du moteur (1) sur une consigne $\left( Q_{air\_frais}^{consigne} \right)$ de débit d'alimentation en air frais du moteur (1), et des moyens d'asservissement (43) de la pression ($P_{adm}$) d'admission des gaz sur une consigne $\left( P_{adm}^{consigne} \right)$ de pression d'admission des gaz, aptes à moduler un taux d'air frais d'alimentation du moteur (1) par commande du positionnement du volet d'admission (15a) d'une vanne commandée (15) de régulation du débit d'alimentation en air du moteur (1), **caractérisé par le fait que** ledit positionnement étant calculé en outre à partir d'un pré-positionnement du volet d'admission (15a) de ladite vanne-commandée (15) qui est une fonction de paramètres comprenant la consigne $\left( Q_{air\_frais}^{consigne} \right)$ de débit d'alimentation en air frais du moteur (1), la pression ($P_{adm}$) d'admission des gaz, la température ($T_{adm}$) d'admission des gaz, et une pression ($P_{ament}$) de l'air en amont du volet d'admission (15a) de la vanne commandée (15) de régulation du débit d'alimentation en air du moteur (1).

**8.** Système selon la revendication 7, **caractérisé par le fait que** lesdits moyens d'asservissement (43) de la pression ($P_{adm}$) d'admission des gaz comprennent des moyens de calcul (43a) d'une consigne prédéterminée $\left( P_{adm}^{consigne} \right)$ de pression d'admission des gaz, et des moyens de commande (43b) du positionnement du volet d'admission (15a) de la vanne commandée (15) de régulation du débit d'alimentation en air du moteur (1), lesdits moyens de commande (43b) comprenant des moyens de calcul (43c) d'un pré-positionnement du volet d'admission (15a) de ladite vanne commandée (15).

**Claims**

**1.** Method for controlling the operation of a motor vehicle internal combustion engine equipped with a supercharging turbocompressor assembly (4), some of the exhaust gases from the engine being recirculated to the inlet side of the engine, in which:

- the engine (1) fresh air supply flow rate ($Q_{air\_frais}$) is measured;
- the gas inlet pressure ($P_{adm}$) and temperature ($T_{adm}$) are measured;
- the engine (1) fresh air supply flow rate ($Q_{air\_frais}$) is regulated to an engine (1) fresh air supply flow rate set point $\left( Q_{air\_frais}^{consigne} \right)$, by altering the level of engine (1) exhaust gas recirculation; and
- the gas inlet pressure ($P_{adm}$) is regulated to a gas inlet pressure set point $\left( P_{air\_frais}^{consigne} \right)$ by altering a level of engine (1) fresh air supply by controlling the positioning of the inlet flap (15a) of a controlled valve (15) that regulates the engine (1) air supply flow rate, the said positioning further being calculated on the basis of a pre-positioning of the inlet flap (15a) of the said controlled valve (15), which is a function of parameters including the engine (1) fresh air supply flow rate set point $\left( Q_{air\_frais}^{consigne} \right)$, the gas inlet pressure ($P_{adm}$), the gas inlet temperature ($T_{adm}$) and a pressure ($P_{amont}$) of the air upstream of the inlet flap (15a) of the controlled valve (15) used to regulate the engine (1) air supply flow rate.

**2.** Method according to Claim 1, **characterized in that** the level of engine (1) exhaust gas recirculation is altered by controlling a controlled valve (21) that regulates the engine (1) exhaust gas recirculation flow rate.

**3.** Method according to one of Claims 1 and 2, **characterized in that** the said pressure ($P_{amont}$) of the gases upstream of the inlet flap (15a) of the controlled valve (15) that regulates the engine (1) air supply flow rate is a function of parameters including a mass of air ($M_{air\_amont}$) upstream of the inlet flap (15a) of the controlled valve (15) that regulates the engine (1) air supply flow rate, of the gas inlet temperature ($T_{adm}$), of a mass-related constant ($R_{air}$) of the air,

and of the volume of the portion of the air circuit upstream of the inlet flap (15a) of the controlled valve (15) that regulates the engine (1) air supply flow rate.

4. Method according to any one of Claims 1 to 3, **characterized in that** the gas inlet pressure set point $(P_{adm}^{consigne})$ is a function of parameters including the engine (1) fuel supply flow rate ($Q_{carb}$), the engine (1) speed ($N_{moteur}$), and the engine (1) coolant temperature ($T_{fr}$).

5. Method according to any one of Claims 1 to 4, **characterized in that** the inlet flap (15a) of the controlled valve (15) that regulates the engine (1) air supply flow rate is positioned on the basis of the difference ($\varepsilon_{Padm}$) between the gas inlet pressure set point $(P_{adm}^{consigne})$ and the gas inlet pressure ($P_{adm}$), of the derivative of the said difference ($\varepsilon_{Padm}$) between the gas inlet pressure set point $(P_{adm}^{consigne})$ and the gas inlet pressure ($P_{adm}$), of the integral over a time interval of the said difference ($\varepsilon_{Padm}$) between the gas inlet pressure set point $(P_{adm}^{consigne})$ and the gas inlet pressure ($P_{adm}$), and of the said pre-positioning.

6. Method according to any one of Claims 1 to 5, **characterized in that** the engine (1) fresh air supply flow rate set point $(Q_{air\_frais}^{consigne})$ is a function of parameters including the engine (1) fuel supply flow rate ($Q_{carb}$) and the engine (1) speed ($N_{moteur}$).

7. System for controlling the operation of a motor vehicle internal combustion engine (1) equipped with a supercharging turbocompressor assembly (4), some of the exhaust gases from the engine being recirculated to the inlet side of the engine, in which the system comprises an electronic control unit (8) capable of performing calculations on stored data and on measured values, a sensor (10) for measuring the engine (1) fresh air supply flow rate ($Q_{air\_frais}$), a sensor (13) for measuring the engine (1) gas inlet pressure ($P_{adm}$), a sensor (12) for measuring the engine (1) gas inlet temperature ($T_{adm}$), and a controlled valve (15) with an inlet flap (15a) for regulating the engine (1) air supply flow rate, the electronic control unit (8) comprising means (42) of regulating the engine (1) fresh air supply flow rate ($Q_{air\_frais}$) to an engine (1) fresh air supply flow rate set point $(Q_{air\_frais}^{consigne})$, and means (43) for regulating the gas inlet pressure ($P_{adm}$) to a gas inlet pressure set point

$(P_{adm}^{consigne})$, which means are able to alter the level of fresh air supplied to the engine (1) by controlling the positioning of the inlet flap (15a) of a controlled valve (15) that regulates the engine (1) air supply flow rate, **characterized in that** the said positioning is also calculated on the basis of a pre-positioning of the inlet flat (15a) of the said controlled valve (15) which is a function of parameters including the engine (1) fresh air supply flow rate set point $(Q_{air\_frais}^{consigne})$, the gas inlet pressure ($P_{adm}$), the gas inlet temperature ($T_{adm}$), and a pressure ($P_{amont}$) of the air upstream of the inlet flap (15a) of the controlled valve (15) that regulates the engine (1) air supply flow rate.

8. System according to Claim 7, **characterized in that** the said means (43) of regulating the gas inlet pressure ($P_{adm}$) comprise means (43a) of calculating a predetermined gas inlet pressure set point $(P_{adm}^{consigne})$, and control means (43b) for controlling the positioning of the inlet flap (15a) of the controlled valve (15) that regulates the engine (1) air supply flow rate, the said control means (43b) comprising means (43c) of calculating a prepositioning of the inlet flap (15a) of the said controlled valve (15).

**Patentansprüche**

1. Verfahren zur Steuerung des Betriebs eines Kraftfahrzeug-Verbrennungsmotors, der mit einer Turboladereinheit (4) ausgestattet ist, wobei ein Teil der Abgase des Motors an die Ansaugseite des Motors rückgeführt werden, bei dem:

    - die Frischluftzufuhrmenge ($Q_{air\_frais}$) des Motors (1) gemessen wird;
    - der Ansaugdruck ($P_{adm}$) und die Ansaugtemperatur ($T_{adm}$) der Gase gemessen werden;
    - die Frischluftzufuhrmenge ($Q_{air\_frais}$) des Motors (1) auf einen Frischluftzufuhrmengensollwert $(Q_{air\_frais}^{consigne})$ des Motors (1) geregelt wird, indem eine Abgasrückführungsrate des Motors (1) moduliert wird; und
    - der Ansaugdruck ($P_{adm}$) der Gase auf einen Ansaugdrucksollwert $(P_{adm}^{consigne})$ der Gase geregelt wird, indem eine Frischluftzufuhrrate des Motors (1) durch Steuerung der Positionierung der Ansaugklappe (15a) eines gesteuerten Ventils (15) zur Regelung der Luftzufuhrmenge des Motors (1) moduliert wird, wobei die Positionierung außerdem ausgehend von einer Vorpositionierung der Ansaugklappe (15a) des gesteuerten Ventils (15) berechnet wird, die eine Funktion von Parametern ist, die den Frischluftzufuhrmengensollwert ( $Q_{air\_frais}^{consigne}$ ) des Motors (1), den Ansaugdruck ($P_{adm}$) der Gase, die Ansaugtemperatur ($T_{adm}$) der Gase und einen Druck ($P_{amont}$) der Luft vor der Ansaugklappe (15a) des gesteuerten Ventils (15) zur Regelung der Luftzufuhrmenge des Motors (1) enthalten.

2.  Verfahren nach Anspruch 1, **dadurch gekennzeichnet, dass** die Modulation der Abgasrückführungsrate des Motors (1) durch Steuerung eines gesteuerten Ventils (21) zur Regelung der Abgasrückführungsmenge des Motors (1) durchgeführt wird.

3.  Verfahren nach einem der Ansprüche 1 und 2, **dadurch gekennzeichnet, dass** der Druck ($P_{amont}$) der Gase vor der Ansaugklappe (15a) des gesteuerten Ventils (15) zur Regelung der Luftzufuhrmenge des Motors (1) eine Funktion von Parametern, die eine Luftmasse ($M_{air\_amont}$) vor der Ansaugklappe (15a) des gesteuerten Ventils (15) zur Regelung der Luftzufuhrmenge des Motors (1) enthalten, von der Ansaugtemperatur ($T_{adm}$) der Gase, von einer Massenkonstante ($R_{air}$) der Luft, und vom Volumen des Abschnitts des Luftkreislaufs vor der Ansaugklappe (15a) des gesteuerten Ventils (15) zur Regelung der Luftzufuhrmenge des Motors (1) ist.

4.  Verfahren nach einem der Ansprüche 1 bis 3, **dadurch gekennzeichnet, dass** der Ansaugdrucksollwert ( $P_{adm}^{consigne}$ ) der Gase eine Funktion von Parametern ist, die die Kraftstoffzufuhrmenge ($Q_{carb}$) des Motors (1), die Drehgeschwindigkeit ($N_{moteur}$) des Motors (1) und die Temperatur ($T_{fr}$) des Kühlfluids des Motors (1) enthalten.

5.  Verfahren nach einem der Ansprüche 1 bis 4, **dadurch gekennzeichnet, dass** die Steuerung der Positionierung der Ansaugklappe (15a) des gesteuerten Ventils (15) zur Regelung der Luftzufuhrmenge des Motors (1) von der Differenz ($\varepsilon_{Padm}$) zwischen dem Ansaugdrucksollwert ( $P_{adm}^{consigne}$ ) der Gase und dem Ansaugdruck ($P_{adm}$) der Gase, der Ableitung der Differenz ($\varepsilon_{Padm}$) zwischen dem Ansaugdrucksollwert ( $P_{adm}^{consigne}$ ) der Gase und dem Ansaugdruck ($P_{adm}$) der Gase, dem Integral über ein Zeitintervall der Differenz ($\varepsilon_{Padm}$) zwischen dem Ansaugdrucksollwert ( $P_{adm}^{consigne}$ ) der Gase und dem Ansaugdruck ($P_{adm}$) der Gase und der Vorpositionierung abhängt.

6.  Verfahren nach einem der Ansprüche 1 bis 5, **dadurch gekennzeichnet, dass** der Frischluftzufuhrmengensollwert ( $Q_{air\_frais}^{consigne}$ ) des Motors (1) eine Funktion von Parametern ist, die die Kraftstoffzufuhrmenge ($Q_{carb}$) des Motors (1) und die Drehgeschwindigkeit ($N_{moteur}$) des Motors (1) enthalten.

7.  System zur Steuerung des Betriebs eines Verbrennungsmotors (1) eines Kraftfahrzeugs, der mit einer Turboladereinheit (4) ausgestattet ist, wobei ein Teil der Abgase des Motors an die Ansaugseite des Motors rückgeführt werden, wobei das System eine elektronische Steuereinheit (8), die ausgehend von gespeicherten Daten und von gemessenen Werten Berechnungen durchführen kann, einen Sensor (10), um die Frischluftzufuhrmenge ($Q_{air\_frais}$) des Motors (1) zu messen, einen Sensor (13), um den Ansaugdruck ($P_{adm}$) der Gase des Motors (1) zu messen, einen Sensor (12), um die Ansaugtemperatur ($T_{adm}$) der Gase des Motors (1) zu messen, und ein gesteuertes Ventil (15) mit Ansaugklappe (15a) zur Regelung der Luftzufuhrmenge des Motors (1) enthält, wobei die elektronische Steuereinheit (8) Einrichtungen (42) zur Regelung der Frischluftzufuhrmenge ($Q_{air\_frais}$) des Motors (1) auf einen Frischluftzufuhrmengensollwert ( $Q_{air\_frais}^{consigne}$ ) des Motors (1) und Einrichtungen (43) zur Regelung des Ansaugdrucks ($P_{adm}$) der Gase auf einen Ansaugdrucksollwert ( $P_{adm}^{consigne}$ ) der Gase enthält, die eine Frischluftzufuhrrate des Motors (1) durch Steuerung der Positionierung der Ansaugklappe (15a) eines gesteuerten Ventils (15) zur Regelung der Frischluftzufuhrmenge des Motors (1) modulieren können, **dadurch gekennzeichnet, dass** die Positionierung außerdem ausgehend von einer Vorpositionierung der Ansaugklappe (15a) des gesteuerten Ventils (15) berechnet wird, die eine Funktion von Parametern ist, die den Frischluftzufuhrmengensollwert ( $Q_{air\_frais}^{consigne}$ ) des Motors (1), den Ansaugdruck ($P_{adm}$) der Gase, die Ansaugtemperatur ($T_{adm}$) der Gase und einen Luftdruck ($P_{amont}$) vor der Ansaugklappe (15a) des gesteuerten Ventils (15) zur Regelung der Luftzufuhrmenge des Motors (1) enthalten.

8.  System nach Anspruch 7, **dadurch gekennzeichnet, dass** die Regelungseinrichtungen (43) des Ansaugdrucks ($P_{adm}$) der Gase Einrichtungen (43a) zur Berechnung eines vorbestimmten Ansaugdrucksollwerts ( $P_{adm}^{consigne}$ ) der Gase und Steuereinrichtungen (43b) der Positionierung der Ansaugklappe (15a) des gesteuerten Ventils (15) zur Regelung der Luftzufuhrmenge des Motors (1) enthalten, wobei die Steuereinrichtungen (43b) Einrichtungen (43c) zur Berechnung einer Vorpositionierung der Ansaugklappe (15a) des gesteuerten Ventils (15) enthalten.

# FIG.1

EP 1 582 718 B1

# FIG.2

$$\text{Calcul P}_{adm}^{consigne} \quad \text{—44}$$

$$\text{Mesure P}_{adm}, \text{T}_{adm}, \text{Q}_{air\_frais} \quad \text{—45}$$

Calcul termes proportionnel, intégral et dérivé de $\varepsilon\text{P}_{adm}$ du prélèvement —46

Calcul pré-positionnement —47

Calcul positionnement —48

# FIG.3

Calcul $Q_{air\_frais}^{consigne}$ — 47a

Estimation $P_{amont}$ — 47b

Calcul $S_{eff\_obj}$ — 47c

Calcul pré-positionnement — 47d

# FIG.4

```
        │
        ▼
┌─────────────────────────┐
│   Calcul Mair_amont     │───── 47e
└─────────────────────────┘
        │
        ▼
┌─────────────────────────┐
│   Estimation Pamont     │───── 47f
└─────────────────────────┘
        │
        ▼
┌─────────────────────────┐
│      Calcul Svol        │───── 47g
└─────────────────────────┘
        │
        ▼
┌─────────────────────────┐
│      Calcul Qvol        │───── 47h
└─────────────────────────┘
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2829530
- EP 1024261 A